# EUROPEAN PATENT SPECIFICATION

(11) **EP 2 767 805 B1**
(45) Date of publication and mention of the grant of the patent: **21.01.2015**
(21) Application number: 13155056.8
(22) Date of filing: 13.02.2013
(51) Int. Cl.: G01D 5/241

(54) **Method for phase drift correction of a capacitive position encoder and capacitive position encoder**
Verfahren zur Phasenverschiebungskorrektur eines kapazitativen Positionskodierers und kapazitativer Positionskodierer
Procédé de correction de dérive de phase d'un codeur de position capacitif et codeur de position capacitif

(43) Date of publication of application: 20.08.2014
(73) Proprietor: SICK STEGMANN GmbH, 78166 Donaueschingen (DE)
(72) Inventor: Francescon, Massimo, 10132 Torino (IT)
(74) Representative: Patentanwälte Westphal, Mussgnug & Partner

(56) References cited:
- DE-A1-102007 041 522
- DE-A1-102008 060 840

## Description

The present invention relates to capacitive position encoders, especially linear or rotary position encoders for determining a linear or angular position that are based on capacitive position sensing and methods for operating such encoders.

Capacitive position encoders derive the linear or angular position from a change of several capacitances as a function of the position of the object whose position is to be determined. They may, e.g. for a rotary position encoder, comprise a number of capacitors whose plates remain at a fixed position and a dielectric modulator that is moving along with the object whose position is to be measured and that is at least partly arranged between the plates of at least one of the capacitors in at least one position of the object.

The position information can then be obtained by application of a series of phase shifted excitation signals to the capacitors, which leads to a modulation that is dependent on the actual position of the modulator. This modulated output signal of the sensor is typically amplified with a charge amplifier, transformed, converted to a digital signal by an analog-digital converter (A/D-converter), filtered and subjected to a discrete Fourier transformation (DFT) in order to obtain digital frequency signals that represent the sine and cosine of an angle or a phase to be measured. These digital frequency signals may then be filtered and processed further.

One difficulty in obtaining precise information from this type of measurement results from the fact that the position information is contained in the phase of the signal. Accordingly, any phase shift of the "true" signal, which are introduced by electronic parts or stray effects, represent an inaccuracy that will worsen the performance of the position encoder. Whereas fixed offsets can be compensated during production or installation, phase drifts that occur e.g. as a consequence of temperature changes, supply voltage, aging or other parameters that cannot be predicted, can currently only be reduced by very careful choice of the combination of analog components used for the circuitry and adapting the circuit design.

Therefore, the problem to be solved by the invention is to provide a capacitive position encoder whose output is less dependent on the effects of phase drift introduced by electronic parts and/or stray effects and a method for reducing the effects of phase drift introduced by electronic parts and/or stray effects on a capacitive position encoder. This problem is solved by a method with the features of claim 1 and a capacitive position encoder with the features of claim 9.

The Method for compensation of phase drift in a capacitive position encoder comprising a capacitive position sensor, an analog signal source for providing a phase shifted, periodic excitation signal to the capacitive position sensor and a signal processing chain comprising an analog block for processing an analog output signal of said capacitive position sensor, an A/D conversion block for converting an analog output signal of the analog block to a digital signal, a digital block for processing a digital signal and a DFT block for performing a discrete Fourier Transform on the digital output signal of the digital block for obtaining digital frequency signals that represent the sine and cosine of an angle or a phase to be measured comprises the following steps:
a) creating a superimposed signal by adding a periodic test signal provided by the analog signal source to the analog output signal of the capacitive position sensor,
b) processing the superimposed signal by the analog block and the A/D conversion block to obtain a processed superimposed signal,
c) decomposing the processed superimposed signal into a processed test signal component and a processed sensor output signal component,
d) analyzing the processed periodic test signal component to extract information on the phase drift induced during analog processing and A/D conversion,
e) analyzing the processed sensor output signal component to extract position information, and
f) using the extracted information on phase drift induced during analog processing and A/D conversion for correction of the position information.

The thus achieved simultaneous processing of the data of interest, i.e. the analog output data of the capacitive position detector, and test data whose "real" properties are well known by analog block and A/D conversion block leads to the possibility to analyze the influence of these components on the data in great detail using information of which at least a significant part is obtained under the very conditions that were present when the data of interest was processed.

In a preferred embodiment of the Method, decomposing the processed superimposed signal into a processed test signal component and a processed sensor output signal component comprises the steps of

c1) obtaining a representation of the processed periodic test signal component by exponential averaging of the processed superimposed signal, and

c2) obtaining the processed sensor output signal component by subtracting the thus obtained representation of the processed periodic test signal as periodic test signal from the processed superimposed signal.

This approach leads to a very reliable decomposition of the processed superimposed signal. Naturally, the "true" processed periodic test signal is unknown, because the actual changes induced by analog block and A/D conversion are not know. However, whereas these processing effects on the signal may be time dependent, their rate of change is much slower than the typical processing cycle, i.e. the time period between two subsequent updates of the value considered in the exponential averaging. On the other hand, the processed sensor output signal component (which is also unknown at the point of time at which the decomposition occurs) is changing, e.g. due to its different frequency, and will cancel out over time. Accordingly, the exponential averaging yields a good representation of the "true" processed periodic test signal which is treated as processed periodic test signal during further processing. Using a very strict terminology -which is avoided for the sake of clarity in most parts of this description,- steps c) and d) will effectively be performed using a (very good) representation of the processed test signal rather than the "true" processed test signal.

A preferred way of performing the exponential averaging is
c1-I) multiplying of the processed superimposed signal with a factor of (1-α), where 0<α<1,
c1-II) adding to the thus obtained signal a content of a memory cell of an averaging memory after scaling said content by multiplication with α, wherein the content of the memory cell is a previous representation of the processed test signal to obtain the actual representation of the processed test signal, and
c1-III) updating the averaging memory by storing the representation of the processed test signal in the memory cell of the averaging memory that comprised the representation of the processed test signal that was used for obtaining the actual representation of the processed test signal.

In other words, according to this embodiment in steps c1-I and c1-II the current processed superimposed signal is used to update the actual representation of the processed test signal, wherein the value of α determines the maximum amount of change to the representation of the processed test signal. The closer the value of α is to 1, the smaller will be the influence of the update.

The above-described approach works specifically if the updating of the averaging memory occurs at fixed points of the period of the periodic test signal and that representations of the processed test signal are stored in separate memory cells for each fixed point. The reason for this is that this approach leads to a fast convergence of the exponential averaging process to the value corresponding to the processed periodic test signal at this point of the period.

According to a preferred embodiment of the method, the amplitude of the test signal provided by the analog signal source is smaller than the amplitude of the analog output signal of the capacitive position sensor. In this way, which is made possible by the high precision of the decoupling step that can be obtained by the method of this invention, one can make sure that effects of a possible dependency of the influence of the processing by analog block and A/D conversion block on the properties of the signal that is processed, especially its amplitude, which could deteriorate the quality of the correction obtained, are mostly avoided.

Preferredly, the frequencies of the periodic test signal provided by the analog signal source and the periodic excitation signal provided by the analog signal source are anharmonic. This measure supports the convergence of the exponential averaging especially in combination with the above-described updating at fixed points of the period of the periodic test signal, because it means that the processed periodic test signal will always be sampled at almost (due to the effects of analog processing and A/D conversion and an eventual time dependence of these effects) identical points of its period, whereas the processed sensor output signal component, which essentially inherits the frequency of the excitation signal, is sampled at different points of its period in different cycles, supporting quick convergence of the content of a corresponding averaging memory cell to a good representation of the "pure" processed periodic test signal at this point of its period. Suitable anharmonic frequency relations between the frequency fₜₑₛₜ of the periodic test signal provided by the analog signal source and the frequency f_{exc} of the periodic excitation signal provided by the analog signal source are, e.g. fₜₑₛₜ=8/9 f_{exc} or fₜₑₛₜ=8/7 f_{exc}.

A preferred embodiment of the method is obtained if two periodic test signals are used in an alternating way, wherein one of the two periodic test signals has a frequency that is smaller than the phase shifted, periodic excitation signal and the other of the two periodic test signals has a frequency that is larger than the phase shifted, periodic excitation signal. In this way, a possible frequency dependence of the effects of processing by analog block and A/D conversion will be considered in the correction of these effects, which is preferredly determined by application of a discrete Fourier transform to the processed periodic test signal component (or, to remind once more on the more accurate wording that is not always chosen for the sake of clarity, the representation thereof) to extract the information on the phase drift induced during analog processing and A/D conversion.

For example, it is possible to average the results obtained from analysis of the periodic test signals that has a frequency that is smaller than the phase shifted, periodic excitation signal and the periodic test signals has a frequency that is larger than the phase shifted, periodic excitation signal. This averaging can, if necessary, be refined further by assigning different weight factors to the respective results.

The actual choice of the two frequencies for the respective periodic test signals is governed by the following considerations:

On the one hand, if the difference of these frequencies to the frequency of the sensor excitation signal, the separation between signal contributions due to the test signal and signal contributions due to the phase shifted excitation signal becomes smaller, increasing the risk of confusion between test signal and an excitation signal that has been shifted due to the detection of variations of the position, e.g. rotation.

On the other hand, as the dependency between the phase shift induced by the analog block and A/D conversion block and the frequency of the processed signal is not necessarily linear, a large frequency difference between the frequencies of the respective periodic test signals and the periodic excitation signal may lead to a situation in which even averaging or weighted averaging may not lead to a good representation of the real phase shift and, accordingly, to a less than optimal correction.

In practice, in most cases good results can be obtained if periodic test signals with frequency fₜ are related to the frequency f_{exc} of the analog periodic excitation signal by the relations ft=8/9 f_{exc} for the periodic test signal with smaller frequency and fₜ=8/7 f_{exc} for the periodic test signal with larger frequency.

The capacitive position encoder for performing a method according to one of the previous claims comprises a capacitive position sensor, an analog signal source for phase shifted, periodic excitation of the capacitive position sensor and a signal processing chain comprising an analog block for processing an analog output signal of said capacitive position sensor, an A/D conversion block for converting an analog output signal of the analog block to a digital signal, a digital block for processing the digital output signal of the A/D conversion block and a DFT block for performing a discrete Fourier Transform on the processed digital output signal of the A/D conversion block for obtaining digital frequency signals that represent the sine and cosine of an angle or a phase representing position information. These components and their specific arrangement are known to a person skilled in the art.

The capacitive position encoder of this invention has two additional features. On the one hand, the analog signal source, which is modified so that it provides at least one additional analog periodic signal that is used as analog periodic test signal and is connected to the signal input of the analog block so that a superimposed signal that corresponds to the addition of the periodic test signal from the signal source and the analog signal of said capacitive position sensor is present at the input of the analog block. As this modification relates to the analog part of the signals, this can be obtained by providing a simple electric connection of a line connected to an output of the signal source to the line that connects the output of the sensor electrically to the input of the analog block.

On the other hand, according to the invention between A/D conversion block and digital processing block of the capacitive position encoder there is a test signal determination and cancellation block for decomposing the processed superimposed signal into a processed test signal component and a processed sensor output signal component, for analyzing the processed periodic determining a phase drift from the processed periodic test signal and for eliminating the digitalized test signal from the digital signal to be processed by the digital block. It should be noted that this modification concerns the digital processing (as evident from the fact that it occurs after A/D conversion by the A/D conversion block) and may therefore, as typical for digital data processing, not only be realized as a hardware solution with specific circuitry, but also partly or completely realized as software running on an appropriate more general system.

According to a preferred embodiment of the invention, the test signal determination and cancellation block comprises means for exponential averaging, specifically an averaging memory, typically with several memory cells, for performing exponential averaging, of the superposition of test signal from the signal source and analog signal of the capacitive position sensor.

According to a further preferred embodiment of the capacitive position, the test signal determination and cancellation block comprises an address generator for determining the memory cell in which the averaging is performed at a given point of time.

Perferredly, the capacitive position encoder has a test signal determination and cancellation block that comprises a discrete Fourier Transform block for obtaining phase information from the processed test signal component.

Next, the invention is explained in more detail based on figures showing specific embodiments of the invention. The figures show:
- Fig. 1:: a block diagram of a capacitive position encoder according to the state of the art,
- Fig. 2:: a block diagram of a capacitive position encoder according to this invention, and
- Fig. 3:: a block diagram illustrating a specific configuration of the test signal determination and cancellation block and the processing steps it performs.

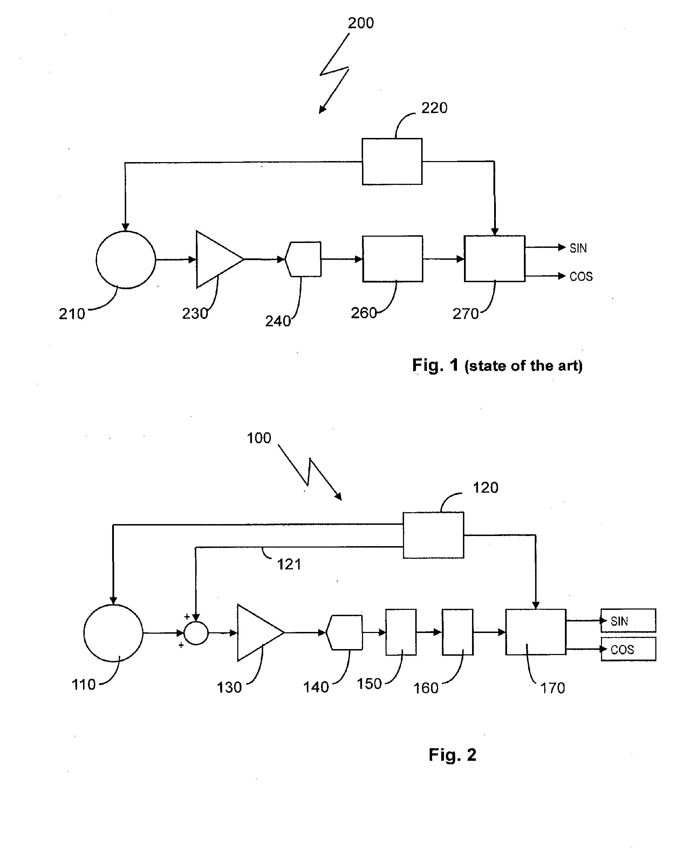

Figure 1 shows a known capacitive position encoder 200 in a block representation. The capacitive position encoder comprises a capacitive position sensor 210, an analog signal source 220 for providing a set of phase shifted analog excitation signals to the capacitive position sensor and a signal processing chain for processing the output signal provided by the capacitive position sensor 210. The signal processing chain comprises an analog block 230, an A/D conversion block 240, a digital block 260 and a DFT block 270, which are sequentially connected, typically in an electrically conducting way, to each other. However, periodic signals of defined frequency that are required to operate the DFT block 270 can be provided b the analog signal source 220 as well.

During operation of the capacitive position encoder 200, the analog signal source 220 supplies a set of phase-shifted periodic excitation signals to the capacitive position sensor 210. A typical set of signals may, e.g., comprise four square wave signals with a frequency f_{exc} that with a phase difference set to +/-90° relative to the respective previous and next square wave.

This set of signals is transformed by the sensor to a position-dependent, analog, periodic output signal. This output signal is processed by the analog block 230, which usually comprises an analog amplifying and filtering chain, specifically e.g. a charge amplifier, a shock cancellation circuit and/or a post amplifier which may have a bandpass function.

The output signal from the analog block 230 is then passed on to the input of A/D block 240, which converts the analog signal to a digital signal, which is then processed in the digital block 260, e.g. data decimation, especially if the system is implemented as multirate system, and/or further band pass filtering and passed on to DFT block 270, which provides the desired position information.

Figure 2 shows a capacitive position encoder 100 according to this invention in a block representation. Just like the capacitive position encoder 200 of Figure 1, the capacitive position encoder 100 comprises a capacitive position sensor 110, an analog signal source 120 and a signal processing chain for processing the analog output signal provided by the capacitive position sensor 110. The signal processing chain comprises an analog block 130, an A/D conversion block 140, a digital block 160 and a DFT block 170.

However, capacitive encoder 100 according to the invention differs from capacitive encoder 200 with respect to two aspects that mainly relate to the signal flow.

On the one hand, analog signal source 120 also has a separate signal connection 121 that adds an analog periodic test signal component to the analog output signal provided by the capacitive position sensor 110. Accordingly, the input to the signal processing chain of capacitive encoder does not just consist of the analog output signal provided by the capacitive position sensor 210, but is a superposition of said analog out

On the other hand, the signal processing chain of capacitive encoder 100 comprises a test signal determination and cancellation block 150 for decomposing the processed superimposed signal into a processed test signal component and a processed sensor output signal component and analyzing the processed test signal component as described in detail below, said test signal determination and cancellation block 150 being inserted into the signal processing chain between the A/D conversion block 140 and the digital block 160.

During operation of the capacitive position encoder 100, the analog signal source 120 supplies a set of phase-shifted periodic excitation signals to the capacitive position sensor 110. A typical set of signals may, e.g., comprise four square wave signals with a frequency f_{exc} that with a phase difference set to +/-90° relative to the respective previous and next square wave. This set of signals is transformed by the sensor to a position-dependent, analog, periodic output signal.

However, in accordance with the invention the analog signal source 120 also supplies at least one further analog periodic signal, i.e. at least one analog periodic test signal, that is superimposed to the position-dependent, analog, periodic output signal of the capacitive position sensor 110.

Preferredly, the frequency fₜ of the analog periodic test signal is anharmonic to the frequency f_{exc} of the analog excitation signal, i.e. *f_{exc}*/*fₜ* ∉ 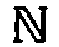 ^ *fₜ*/*f_{exc}* ∉ 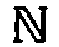 . For example, in preferred embodiments fₜ may be 8/9 f_{exc} or 8/7 f_{exc} or switch between 8/9 f_{exc} and 8/7 f_{exc} if different periodic test signals are provided at differrent points of time. Its amplitude is preferredly small, in the order of a few percent, compared to the analog periodic output signal of the capacitive position sensor 110.

Accordingly, instead of the sensor output signal this superimposed signal is processed by the analog block 130, which usually comprises an analog amplifying and filtering chain, specifically e.g. a charge amplifier, a shock cancellation circuit and/or a post amplifier which may have a bandpass function and passed on to the input of A/D block 140, which converts the analog signal to a digital signal.

Naturally, the information that is processed in the digital block 160 e.g. by data decimation, especially if the system is implemented as multirate system, and/or further band pass filtering, and passed on to DFT block 170, which provides the desired position information, should not be influenced by the presence of the additional analog test signal. For this reason, the test signal determination and cancellation block 150 is inserted into the signal processing chain between the A/D conversion block 140 and the digital block 160. It should be noted, that the term "insertion of this block" comprises every realization in which prior to the operations of the digital block 160 as known from the state of the art the digital processed superimposed signal is decomposed into a processed test signal component and a processed sensor output signal component either by means of hardware or software operations and is not supposed to imply that necessarily a separate physical block must be present.

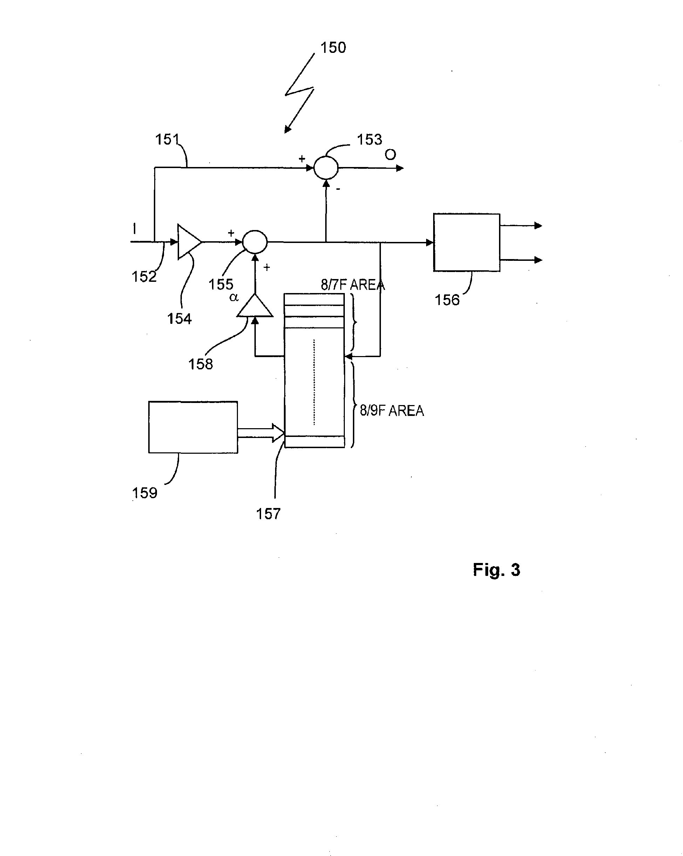

An example for a possible structure of the test signal determination and cancellation block 150 is shown in Figure 3 as a block diagram. At the input I, the signal from the A/D conversion block is received. After the input, there is a first processing branch 151 and a second processing branch 152. The second processing branch comprises a first adder 153. A first input of first adder 153 is connected to the input I, the output of the first adder 153 represents the output provided to the digital block 160.

In the second processing branch 152, there is a first multiplier 154 that is connected to a first input of the second adder 155. The output of the second adder 155 is inverted and connected to a second input of the first adder 153, to a DFT block 156 for obtaining phase information on the processed periodic test signal and thus on the phase shift induced during analog processing by analog block 130 and A/D conversion block 140.

Furthermore, the output of the second adder 155 is connected to the input of a memory cell of an averaging memory 157. The output of said memory cell is connected via a second multiplier 158 to a second input of the second adder 155.

An address generator 159 controls which memory cell of the averaging memory 157 is active at a given point of time, i.e. to which memory cell information is written and from which memory cell information is obtained.

Next, the signal processing in the thus structured test signal determination and cancellation block 150 is described. At the input I, a digitalized superposition of the processed analog output signal of the capacitive position sensor 110 and the analog test signal is provided. In this example, it is assumed that two analog test signals that are switched between 8/9 f_{exc} and 8/7 f_{exc} each time a period of the analog test signal has been completed. Furthermore it is assumed that the sampling, i.e. the point of time at which a given memory cell of the averaging memory 157 is refreshed, occurs at identical points of the test signal period in each test signal period.

This implies that the averaging memory 157 comprises a separate memory cell for each sampling point of the test signal with frequency 8/9 f_{exc} and for each sampling point of the test signal with frequency 8/7 f_{exc}, respectively, which may be considered to form an 8/7 memory area and an 8/9 memory area, respectively. Accordingly, the address generator is set to switch the active memory cell that is currently used after each sampling, so that the same memory cell of the averaging memory 157 is active for all samples obtained at a given point of the test signal period of a given test signal.

Looking first at the second branch 152, the superimposed signal is scaled by the first multiplier 154 multiplying the processed superimposed signal with a factor of (1-α), where 0<α<1. Next, to the thus obtained signal a content of the currently active memory cell of the averaging memory 157 is added after scaling said content by multiplication with α, as obtained by the second multiplier 158, by the second adder 155.

As will become evident below, this content of the memory cell of the averaging memory is a previous representation of the processed test signal. The sum provided as output of the second adder 155 is the actual representation of the processed test signal.

This actual representation of the processed test signal is used in several ways. First of all, it is used to update the averaging memory 157, more precisely its memory cell that is currently activated by the address generator 159 by storing the representation of the processed test signal. This memory cell of the averaging memory 157 previously comprised the representation of the processed test signal that was used for obtaining the actual representation of the processed test signal.

It is instructive to look at the development of the content of a given cell of the averaging memory 157 over a number of cycles. Because the sampling occurs always at the same point of the period of the analog test signal, which corresponds to different points of the period of the output signal because of the anharmonic relation between test frequency and excitation frequency, the contributions of the sensor output signal will cancel over time. In other words, after a number of cycles, the averaging memory contains a very good representation of the processed test signal component of the superimposed signal.

For this reason, it is possible to make use of the actual representation as obtained at the output of the second adder 155 in two more ways: First, it can be inverted and used by the first adder 153 to remove the processed test signal component from the superimposed signal, thus effectively cancelling its potential effect on further processing in the digital block 160. Second, because the original analog periodic test signal is well known, the representation of the processed periodic test signal can be analyzed using a discrete fourier transform block 156 that belongs to the test signal determination and cancellation block 150 in order to determine the phase shift resulting from signal processing in analog block 130 and A/D conversion block 140. This information can then be used during processing of the main sensor signal in the digital block 160 or in the discrete Fourier transform block 170 of capacitive position encoder 100.

### Reference Numerals

- 100, 200: capacitive position encoder
- 110, 210: capacitive position sensor
- 120, 220: analog signal source
- 121: signal connection
- 130, 230: analog block
- 140, 240: A/D conversion block
- 150: test signal determination and cancellation block
- 151: first processing branch
- 152: second processing branch
- 153: first adder
- 154: first multiplier
- 155: second adder
- 156: DFT block
- 157: averaging memory
- 158: second multiplier
- 159: address generator
- 160, 260: Digital block
- 170, 270: DFT block
- I: Input
- O: Output

## Claims

1. Method for compensation of phase drift in a capacitive position encoder (100) comprising a capacitive position sensor (110), an analog signal source (120) for providing a phase shifted, periodic excitation signal to the capacitive position sensor and a signal processing chain comprising an analog block (130) for processing an analog output signal of said capacitive position sensor (110), an A/D conversion block (140) for converting an analog output signal of the analog block (130) to a digital signal, a digital block (160) for processing a digital signal and a DFT block (170) for performing a discrete Fourier Transform on a digital output signal obtained from the digital block (160) for obtaining digital frequency signals that represent the sine and cosine of an angle or a phase to be measured comprising the steps of
- creating a superimposed signal by adding a periodic test signal provided by the analog signal source (120) to the analog output signal of the capacitive position sensor (110),
- processing the superimposed signal by the analog block (130) and the A/D conversion block (140) to obtain a processed superimposed signal,
- decomposing the processed superimposed signal into a processed test signal component and a processed sensor output signal component,
- analyzing the processed periodic test signal component to extract information on the phase drift induced during analog processing by the analog block (130) and A/D conversion by the A/D conversion block (140),
- analyzing the processed sensor output signal component to extract position information, and
- using the extracted information on phase drift induced during analog processing by the analog block (130) and A/D conversion by the A/D conversion block (140) for correction of the position information.

2. Method according to claim 1,
**characterized in that** decomposing the processed superimposed signal into a processed test signal component and a processed sensor output signal component comprises the steps of
- obtaining a representation of the processed periodic test signal component by exponential averaging of the processed superimposed signal, and
- obtaining the processed sensor output signal component by subtracting the thus obtained representation of the processed periodic test signal from the processed superimposed signal.

3. Method according to claim 2,
**characterized in that** the exponential averaging is performed by
- multiplying of the processed superimposed signal with a factor of (1-α), where 0<α<1,
- adding to the thus obtained signal a content of a memory cell of an averaging memory (157) after scaling said content by multiplication with α, wherein the content of the memory cell is a previous representation of the processed test signal to obtain the actual representation of the processed test signal, and
- updating the averaging memory (157) by storing the representation of the processed test signal in the memory cell of the averaging memory (157) that comprised the representation of the processed test signal that was used for obtaining the actual representation of the processed test signal.

4. Method according to claim 3,
**characterized in that** the updating of the averaging memory (157) occurs at fixed points of the period of the periodic test signal and that representations of the processed test signal are stored in separate memory cells for each fixed point of the period of the periodic test signal.

5. Method according to any one of the previous claims,
**characterized in that** the amplitude of the test signal provided by the analog signal source (120) is smaller than the amplitude of the analog output signal of the capacitive position sensor (110).

6. Method according to any one of the previous claims,
**characterized in that** the frequencies of the test signal provided by the analog signal source (120) and the excitation signal provided by the analog signal source (120) are anharmonic.

7. Method according to any one of the previous claims,
**characterized in that** two periodic test signals are used in an alternating way, wherein one of the two periodic test signals has a frequency that is smaller than the phase shifted, periodic excitation signal and the other of the two periodic test signals has a frequency that is larger than the phase shifted, periodic excitation signal.

8. Method according to any one of the previous claims,
**characterized in that** a discrete Fourier transform is applied to the processed periodic test signal component to extract the information on the phase drift induced during analog processing and A/D conversion.

9. Capacitive position encoder (100) for performing a method according to one of the previous claims comprising a capacitive position sensor (110), an analog signal source (120) for phase shifted, periodic excitation of the capacitive position sensor (110) and a signal processing chain comprising an analog block (130) for processing an analog output signal of said capacitive position sensor (110), an A/D conversion block (140) for converting an analog output signal of the analog block (130) to a digital signal, a digital block (160) for processing the digital output signal of the A/D conversion block (140) and a DFT block (170) for performing a discrete Fourier Transform on the digital output signal of the digital block (160) for obtaining digital frequency signals that represent the sine and cosine of an angle or a phase representing position information
**characterized in that** the analog signal source (120) is connected to the signal input of the analog block (130) so that a superimposed signal that corresponds to the addition of the periodic test signal from the analog signal source (120) and the analog signal of said capacitive position sensor (110) is present at the input of the analog block (130) and that a test signal determination and cancellation block (150) for decomposing the processed superimposed signal into a processed test signal component and a processed sensor output signal component, for analyzing the processed periodic by determining a phase drift from the processed periodic test signal and for eliminating the digitalized test signal from the digital signal to be processed by the digital block is located between the A/D conversion block (140) and the digital block (160).

10. Capacitive position encoder (100) according to claim 9,
**characterized in that** the test signal determination and cancellation block (150) comprises an averaging memory (157) for performing exponential averaging of the superposition of test signal from the signal source (120) and analog signal of the capacitive position sensor (110).

11. Capacitive position encoder (100) according to claim 10,
**characterized in that** the test signal determination and cancellation block (150) comprises an address generator (159) for determining the memory cell of the averaging memory (157) in which the averaging is performed at a given point of time.

12. Capacitive position encoder (100) according to one of claims 9 to 11,
**characterized in that** the test signal determination and cancellation block (150) comprises a discrete Fourier Transform block (170) for obtaining phase information from the processed test signal component.

## Patentansprüche

1. Verfahren zur Kompensation von Phasendrift in einem kapazitiven Positionsgeber (100) mit einem kapazitiven Positionssensor (110), einer analoge Signalquelle (120) zur Bereitstellung von einem phasenverschobenen, periodischen Anregungssignal zu dem kapazitiven Positionssensor und eine Signalverarbeitungskette, umfassend einen Analog-Block (130) zum Verarbeiten eines analogen Ausgangssignal des kapazitiven Positionssensor (110), einen A/D-Umwandlungsblock (140) zum Umwandeln eines analogen Ausgangssignal des Analog-Block (130) in ein digitales Signal, einen digitalen Block (160) zum Verarbeiten eines digitalen Signals und einen DFT-Block (170) zur Durchführung einer diskreten Fourier-Transformation an einem vom Digitalblock (160) erhaltenen, digitalen Ausgangssignal zum Erhalten digitaler Frequenzsignale, die den Sinus und den Kosinus eines zu messenden Winkels oder Phase repräsentieren umfassend die Schritte:
- Schaffung eines überlagerten Signals, indem ein periodisches Testsignal, das durch die analoge Signalquelle (120) bereitgestellt ist, zu dem analogen Ausgangssignal des kapazitiven Positionssensor (110) addiert wird,
- Verarbeiten des überlagerten Signals durch den analogen Block (130) und den A/D-Umwandlungsblock (140), um ein verarbeitetes überlagertes Signal zu erhalten,
- Zersetzung des verarbeiteten überlagerten Signals in eine verarbeitete Testsignalkomponente und eine verarbeitete Sensorausgangssignalkomponente,
- Analyse der verarbeiteten periodischen Testsignalkomponente um Informationen über den Phasendrift zu erhalten, der während der analogen Verarbeitung durch den Analog-Block (130) und A/D-Umwandlung durch den A/D-Umwandlungsblock (140) induziert wird, zu extrahieren,
- Analyse der verarbeiteten Sensorausgangssignalkomponente um die Positionsinformation zu extrahieren, und
- Verwendung der extrahierten Informationen über den Phasendrift, der während der analogen Verarbeitung durch den Analog-Block (130) und A/D-Umwandlung durch den A/D-Umwandlungsblock (140) induziert wird, zum Korrigieren der Positionsinformation.

2. Verfahren nach Anspruch 1, **dadurch gekennzeichnet** das Zersetzen des verarbeiteten überlagerten Signals zu einer verarbeiteten Testsignalkomponente und eine verarbeitete Sensorausgangssignalkomponente die Schritte umfasst:
- Erhalten einer Darstellung des verarbeiteten periodischen Testsignalanteil durch exponentielle Mittelung der verarbeiteten überlagerten Signale, und
- Erhalt der verarbeiteten Sensorausgangssignalkomponente durch Subtraktion der so erhaltenen Darstellung des verarbeiteten periodischen Testsignals aus dem verarbeiteten überlagerten Signal.

3. Verfahren nach Anspruch 2, **dadurch gekennzeichnet, dass** die exponentielle Mittelung durchgeführt wird durch
- Multiplizieren des verarbeiteten überlagerten Signals mit einem Faktor (I-α), wobei 0 < α <1,
- Zugabe zu dem so erhaltenen Signal einen Inhalt einer Speicherzelle eines Mittelungsspeichers (157) nach dem Skalieren des Inhalts durch Multiplikation mit α, wobei der Inhalt der Speicherzelle eine vorherige Darstellung des verarbeiteten Testsignal ist, um die tatsächliche Darstellung des verarbeiteten Testsignals zu erhalten, und
- Aktualisieren des Mittelungsspeichers (157) durch Speichern der Darstellung des verarbeiteten Testsignals in der Speicherzelle dem Mittelungsspeicher (157), der die Darstellung der verarbeiteten Testsignals enthält, das verwendet wurde zum Erhalten der tatsächlichen Darstellung des verarbeiteten Testsignals.

4. Verfahren nach Anspruch 3, **dadurch gekennzeichnet dass** die Aktualisierung des Mittelungsspeichers (157) an festen Punkten der Periode des periodischen Testsignals erfolgt und dass Darstellungen des verarbeiteten Testsignals in getrennten Speicherzellen für jeden festen Punkt der Periode der periodischen Testsignal gespeichert werden.

5. Verfahren nach einem der vorhergehenden Ansprüche, **dadurch gekennzeichnet, dass** die Amplitude des Testsignals von der analogen Signalquelle (120) kleiner ist als die Amplitude des analogen Ausgangssignals des kapazitiven Positionssensor (110).

6. Verfahren nach einem der vorhergehenden Ansprüche, **dadurch gekennzeichnet, dass** die Frequenzen des Testsignals bereitgestellt durch die analoge Signalquelle (120) und das Anregungssignal bereitgestellt durch die analoge Signalquelle (120) anharmonisch sind.

7. Verfahren nach einem der vorhergehenden Ansprüche, **dadurch gekennzeichnet, dass** zwei periodische Testsignale in einer abwechselnden Weise verwendet werden, wobei eines der beiden periodischen Messsignale eine Frequenz hat, die kleiner als das phasenverschobene, periodische Anregungssignal ist und das andere der beiden periodischen Testsignal eine Frequenz hat, die größer ist als das phasenverschobene, periodische Anregungssignal.

8. Verfahren nach einem der vorhergehenden Ansprüche, **dadurch gekennzeichnet, daß** eine diskrete Fourier-Transformation auf die verarbeitete periodische Testsignalkomponentegewandt wird, um die Informationen über die Phasenverschiebung zu erhalten, die während der Analogverarbeitung und A/D-Wandlung induziert wird.

9. Kapazitiver Positionsgeber (100) zur Durchführung eines Verfahrens nach einem der vorhergehenden Ansprüche, umfassend einen kapazitiven Sensor (110), eine analoge Signalquelle (120) zur phasenverschobenen, periodischen Anregung des kapazitiven Positionssensors (110) und einer Signalverarbeitungskette, umfassend einen Analog-Block (130) zur Verarbeitung eines analoge Ausgangssignal des kapazitiven Positionssensors (110), einen A/D-Umwandlungsblock (140) zum Umsetzen eines analoge Ausgangssignal des Analog-Block (130) in ein digitales Signal, einen digitalen Block (160) zum Verarbeiten des digitalen Ausgangssignals des A/D-Umwandlungsblock (140) und einen DFT-Block (170) zur Durchführung einer diskreten Fourier Transformation an dem digitalen Ausgangssignal des digitalen Block (160) zum Erhalten digitaler Frequenzsignale, die den Sinus- und Cosinus eines Winkels oder einer Phase repräsentieren, die wiedrum Positionsinformationen repräsentieren, **dadurch gekennzeichnet,**
**dass** die analoge Signalquelle (120) mit dem Signaleingang des Analog-Block (130) verbunden ist, so dass eine überlagertes Signal am Eingang des Analog-Block (130) anliegt, wobei dieses einer Überlagerung des periodischen Testsignals von der analogen Signalquelle (120) mit dem Analogsignal des kapazitiven Positionssensor (110) ist,
und **dass** ein Testsignalbestimmungs- und Stornierungsblock (150) zwischen dem A/D-Wandlerbock (140) und dem digitale Block (160) liegt und zur Zersetzung des verarbeiteten überlagerten Signals in eine verarbeiteten Testsignalkomponente und eine verarbeitete Sensorausgangssignalkomponente dient, zum Analysieren des verarbeiteten periodischen Testsignals durch Bestimmen einer Phasenverschiebung aus dem verarbeiteten periodischen Testsignal dient und zum Beseitigen des digitalisierten Testsignals aus dem digitalen Signal, das von dem digitalen Block bereitgstellt wird, dient.

10. Kapazitiver Positionsgeber (100) nach Anspruch 9, **dadurch gekennzeichnet, dass** der Testsignalbestimmungs- und Löschungsblock (150) einen Mittelwertspeicher (157) zum Ausführen einer exponentiellen Mittelung der Überlagerung des Testsignals von der Signalquelle (120) und des Analogsignals von dem kapazitiven Positionssensor (110) umfasst.

11. Kapazitiver Positionsgeber (100) nach Anspruch 10, **dadurch gekennzeichnet, dass** der Testsignalbestimmungs- und Löschungsblock (150) einen Adressengenerator (159) zum Bestimmen der Speicherzelle des Mittelungsspeichers (157), in dem die Mittelungs bei einem gegebenen Zeitpunkt durchgeführt wird, umfasst.

12. Kapazitiver Positionsgeber (100) nach einem der Ansprüche 9 bis 11, **dadurch gekennzeichnet, dass** der Testsignalbestimmungs- und Löschungsblock (150) einen diskreten Fourier-Transformations-Block (170) zum Erhalten von Phaseninformation aus der verarbeiteten Testsignal-Komponente, umfasst.

## Revendications

1. Méthode pour la compensation de la dérive de phase dans un capacitif capteur de position (100) comprenant une position capacitive Capteur (110), une source de signal analogique (120) pour fournir un décalage de phase, un signal périodique d'excitation de capteur de position capacitif et une chaîne de traitement de signal comprenant un bloc analogique (130) pour traiter un analogue signal de sortie dudit capteur de position capacitif (110), un bloc de conversion A / N (140) pour convertir un analogue signal de sortie du bloc analogique (130) en un signal numérique, un bloc numérique (160) pour traiter un signal numérique et un bloc DFT (170) pour effectuer une discrète Transformée de Fourier sur un signal de sortie numérique obtenu from.The bloc numérique (160) pour obtenir des signaux de fréquence numériques représentant le sinus et le cosinus d'un une phase ou angle à mesurer, comprenant les étapes consistant à - La création d'un signal superposé par addition d'un périodique signal de test provenant de la source de signal analogique (120) à le signal de sortie analogique du capteur de position capacitif (110),
- Le traitement du signal superposé par le bloc analogique (130) et le bloc de conversion A / N (140) pour obtenir une traiter le signal superposé,
- Décomposer le signal superposé transformé en un composant de signal de test traité et un capteur transformés composante de signal de sortie,
- L'analyse de la composante de signal de test périodique transformés pour extraire des informations sur la dérive de phase induite pendant traitement analogique par le bloc analogique (130) et conversion A / N par le bloc de conversion A / N (140),
- L'analyse de la composante de signal de sortie de capteur traitées pour extraire des informations de position, et
- En utilisant les informations extraites sur la dérive de phase induite au cours du traitement analogique par le bloc analogique (130) et Une conversion A / N par le bloc de conversion A / N (140) pour correction de l'information de position.

2. Procédé selon la revendication 1, **caractérisé en ce que** la décomposition le signal superposé transformé en un test transformés composante de signal et un signal de sortie de capteur traitées composant comprend les étapes consistant à
- L'obtention d'une représentation de la transformée périodique composante de signal d'essai en faisant la moyenne exponentielle de la traiter le signal superposé, et
- L'obtention de la composante de signal de sortie de capteur traitées par soustraction de la représentation ainsi obtenu de signal de test périodique traité du signal superposé traitées.

3. Procédé selon la revendication 2, **caractérisé en ce que** la moyenne exponentielle est exécutée par
- Multiplication du signal superposé traitées avec un facteur de (I-a), où 0 <a <1,
- Ajouter au signal ainsi obtenu un contenu d'une cellule de mémoire d'une mémoire de calcul de moyenne (157) après ladite mise à l'échelle contenu par multiplication par un, dans lequel la teneur en la cellule de mémoire est une représentation précédente de la signal de test traitée pour obtenir la représentation réelle du signal de test traité, et
- Mettre à jour la mémoire de moyenne (157) en stockant la représentation du signal de test traité dans la mémoire cellule de la mémoire de moyenne (157) qui comprend la représentation du signal de test qui a été utilisé traité pour l'obtention de la représentation effective du traité signal de test.

4. Procédé selon la revendication 3, **caractérisé en ce que** la mise à jour de la mémoire de moyenne (157) se produit en des points fixes de la période du signal de test périodique et que les représentations du signal de test traitées sont stockées dans les cellules de mémoire pour chaque point de la période du signal de test périodique fixe.

5. Procédé selon l'une quelconque des revendications précédentes, **caractérisé en ce que** l'amplitude du signal de test provenant de la source de signal analogique (120) est inférieure à l'amplitude de la sortie analogique signal du capteur de position capacitif (110).

6. Procédé selon l'une quelconque des revendications précédentes, **caractérisé en ce que** les fréquences du signal de test fourni par le signal analogique la source (120) et le signal d'excitation fourni par le source de signal analogique (120) sont anharmonique.

7. Procédé selon l'une quelconque des revendications précédentes, deux périodique signaux de test sont utilisés de manière alternée, dans lequel une des deux signaux de test périodique a une fréquence qui est plus petite que la phase décalée, le signal d'excitation périodique et l'autre des deux signaux de test périodique a une fréquence qui est plus grand que le décalage de phase, périodique signal d'excitation.

8. Procédé selon l'une quelconque des revendications précédentes, **caractérisé en ce qu'**un discret Transformée de Fourier est appliquée à the processed périodique composante de signal de test pour extraire les informations sur la dérive de phase induite pendant le traitement et la conversion analogique / numérique.

9. Capacitif codeur de position (100) pour réaliser un procédé selon l'une des revendications précédentes, comprenant un capteur de position capacitif (110), une source de signal analogique (120) pour déphasés, l'excitation périodique du capteur capacitif de position (110) et un traitement de signal chaîne comprenant un bloc analogique (130) pour traiter un signal de sortie analogique dudit capteur de position capacitif (110), un bloc de conversion A / N (140) pour convertir un signal du bloc analogique (130) en un signal numérique, un bloc numérique (160) pour traiter le signal numérique de sortie du bloc de conversion A / D (140) et une sortie analogique un bloc DFT (170) destiné à effectuer une transformée de Fourier discrète Transformer le signal de sortie numérique du convertisseur numérique bloc (160) pour obtenir des signaux de fréquence numériques représenter le sinus et le cosinus d'un angle ou une phase représentant des informations de position
**caractérisé en ce que**
la source de signal analogique (120) est reliée au signal entrée du bloc analogique (130) de sorte qu'une superposées signal qui correspond à l'addition de l'périodique signal de test provenant de la source de signal analogique (120) et le signal analogique dudit capteur de position capacitif (110) est présente à l'entrée du bloc analogique (130) et **en ce qu'**un test de détermination de signal et le bloc d'annulation (150) pour décomposer le signal superposé transformé en un composant de signal de test traité et un capteur transformés composante de signal de sortie, pour l'analyse périodique traité par la détermination d'une dérive de phase de la transformée signal de test périodique et pour éliminer l'numérisée signal de test à partir du signal numérique à traiter par le bloc numérique est situé entre la conversion A/D bloc (140) et le bloc numérique (160).

10. Capteur de position capacitif (100) selon la revendication 9, **caractérisé en ce que** le bloc de détermination de signal de test et l'annulation (150) comprend une mémoire de calcul de moyenne (157) pour effectuer une moyenne exponentielle de la superposition de signal de test provenant de la source de signal (120) et le signal analogique du capteur de position capacitif (110).

11. Capteur de position capacitif (100) selon la revendication 10, **caractérisé en ce que** la détermination du signal de test et l'annulation bloc (150) comprend un générateur d'adresse (159) pour déterminer la mémoire cellule de la mémoire de moyenne (157), dans lequel le calcul de la moyenne est réalisée à un moment donné.

12. Capteur de position capacitif (100) selon l'une quelconque des revendications 9 à 11, **caractérisé en ce que** le bloc de détermination de signal de test et l'annulation (150) comprend une transformée de Fourier discrète bloc (170) pour obtenir des informations de phase de la composante de signal d'essai traitée.
